# EUROPÄISCHE PATENTSCHRIFT

(11) **EP 0 941 422 B1**
(45) Veröffentlichungstag und Bekanntmachung des Hinweises auf die Patenterteilung: **14.01.2004**
(21) Anmeldenummer: 97950017.0
(22) Anmeldetag: 22.10.1997
(51) Int. Cl.: F16D 65/16

(54) **SCHEIBENBREMSE**
DISK BRAKE
FREIN A DISQUE

(30) Priorität: 25.10.1996 DE 19644512
(43) Veröffentlichungstag der Anmeldung: 15.09.1999
(73) Patentinhaber: Continental Teves AG & Co. oHG, 60488 Frankfurt (DE)
(72) Erfinder: DÖLL, Andreas, D-60439 Frankfurt (DE); KEFERSTEIN, Hans-Georg, D-64291 Darmstadt (DE); KRANLICH, Holger, D-61184 Karben (DE); THIEL, Rudolf, D-60488 Frankfurt (DE); BAUER, Jürgen, D-65187 Wiesbaden (DE)
(86) Internationale Anmeldenummer: PCT/EP1997/005821
(87) Internationale Veröffentlichungsnummer: WO 1998/019076

(56) Entgegenhaltungen:
- WO-A-91/10841
- DE-A- 3 438 209
- US-A- 4 256 207
- US-A- 4 304 416
- US-A- 5 529 150

## Beschreibung

Die Erfindung betrifft eine Scheibenbremse mit hydraulisch betätigbaren Bremsbelägen sowie mit einer mechanischen Betätigungseinrichtung, welche eine in einer Bohrung eines Bremsgehäuses drehbar sowie gedichtet gelagerte Betätigungswelle aufweist, die auf zumindest einen der Bremsbeläge einwirkt.

Eine derartige Scheibenbremse ist bereits aus der DE-OS 34 38 209 bekannt. Die Betätigungswelle ist zylindrisch sowie drehbar in einem Gleitlager gelagert und im Bereich einer Wellendurchführung befindet sich ein Wellendichtring, dessen Dichtlippe am Umfang der Betätigungswelle anliegt.

Die Herstellung derartiger Scheibenbremsen ist aufwendig, weil die Betätigungswelle einerseits im Bereich des Wellendichtrings mit einer zylindrischen Auflagefläche zu versehen ist und andererseits im Bereich eines Druckstückes eine Ausnehmung vorzusehen ist, was grundsätzlich mit spanenden Fertigungsmethoden erfolgt.

Zwar ist man zwischenzeitlich dazu übergegangen, Profilstangen als Betätigungswelle einzusetzen, deren Ausnehmung sich über die gesamte Baulänge der Betätigungswelle erstreckt. Dadurch wird zumindest der Aufwand zur Herstellung der Ausnehmung vermieden. Eine andere Möglichkeit zur Vermeidung der beschriebenen Ausnehmung zeigt das Dokument WO 9110841, bei der das Druckstück durch zwei aufeinander einwirkende Rampen ersetzt ist. Bei dieser Konstruktion wie auch bei den weiter oben beschriebenen Konstruktionen ist die Abdichtung der Lagerung derartiger Betätigungswellen gegen das Eindringen von Schmutz und Feuchtigkeit von außen jedoch noch nicht zufriedenstellend gelöst. Folglich treten häufig festkorrodierte Betätigungswellen und damit unbrauchbare Scheibenbremsen auf.

Aufgabe der vorliegenden Erfindung ist es daher, eine zuverlässige und auch preisgünstige Lagerabdichtung profilierter Betätigungswellen bereitzustellen, die über die gesamte Lebensdauer der Scheibenbremse eine zuverlässige Funktion und ferner geringe Reibungsverluste erlaubt.

Diese Aufgabe wird mit den kennzeichnenden Merkmalen des Patentanspruches 1 dadurch gelöst, daß zumindest im Bereich einer Wellendurchführung ein drehfest mit der Welle bewegbares Dichtungselement vorgesehen ist, welches in radialer Richtung mit zugeordneten Dichtungselementen und/oder Dichtflächen zusammenwirkt. Ein weiterer Vorteil ergibt sich, wenn das mit der Betätigungswelle bewegbare Dichtungselement auch in axialer Richtung mit einem zugeordneten ergänzenden Dichtungselement und/oder einer zugeordneten Dichtfläche zusammenwirkt.

Die kennzeichnenden Merkmale des Patentanspruches 1 erlauben in besonders vorteilhafter Art und Weise die Kombination von profilierten Betätigungswellen mit herkömmlichen und handelsüblichen Dichtungselementen beziehungsweise mit einfach herstellbaren Dichtflächen. Folglich ist der notwendige Kostenaufwand gering.

Der Kostenaufwand läßt sich noch weiter verringern, wenn das Dichtungselement gemäß Patentanspruch 7 als Buchse ausgebildet ist, die beispielsweise mit Hilfe von Tiefziehprozessen aus Blech oder auch aus Kunststoff hergestellt werden kann. Eine als Schnappelement ausgebildete Buchse lässt sich einfach und kostengünstig an der Betätigungswelle montieren.

Eine dichtungsspezifischer Funktionsvorteil läßt sich erzielen, wenn an die Buchse ein wellenendseitiger Bund angeformt wird, an dem gleichzeitig eine Dichtfläche für die axiale Anlage eines Dichtungselementes ausgebildet ist.

Gemäß den Patentansprüchen 12 und 13 ist es vorgesehen, daß das Dichtungselement scheibenförmig ist und mit radial äußeren sowie axialen Dichtlippen versehen ist, welche zur Anlage an Gegendichtflächen dienen. Zusammen mit axialen Dichtlippen wird eine vorkammer vor der radialen Dichtung erzeugt, was die Dichtwirkung des Dichtungselementes zusätzlich verbessert.

Gemäß einer Weiterbildung der Erfindung ist das Dichtungselement mit mindestens einer Ausnehmung versehen, in die ein Mitnehmer des Betätigungshebels eingreift. Dadurch wird eine verbesserte drehfeste Verbindung des Dichtungselementes mit der Welle erreicht.

Zusätzliche Weiterbildungen und vorteilhafte Ausgestaltungen der Erfindung gehen aus Unteransprüchen zusammen mit der Beschreibung und der Zeichnung hervor. Die Erfindung wird nachstehend anhand von Ausführungsbeispielen, die in der Zeichnung dargestellt sind, näher beschrieben. In der Zeichnung zeigt:
- Fig. 1: einen Schnitt durch eine mechanische Betätigungseinrichtung einer Scheibenbremse gemäß dem Stand der Technik;
- Fig. 2: eine geschnittene Ansicht einer Abdichtung einer mechanischen Betätigungseinrichtung gemäß der Erfindung in einer Ansicht wie in Fig. 1;
- Fig. 3: eine geschnittene Ansicht einer weiterentwickelten Abdichtungsanordnung der mechanischen Betätigungseinrichtung;
- Fig. 4: eine geschnittene Ansicht einer weiteren Variante der Abdichtungsanordnung;
- Fig. 5: Einzelheiten einer abgewandelten Ausführungsform in einer Ansicht wie in Fig. 2;
- Fig. 6: eine weitere abgewandelte Ausführungsform der Erfindung;
- Fig. 7: Ansicht eines scheibenförmigen Dichtungselementes;
- Fig. 8: Schnitt durch ein scheibenförmiges Dichtungselement entlang der Linie VI-VI in Fig. 7.

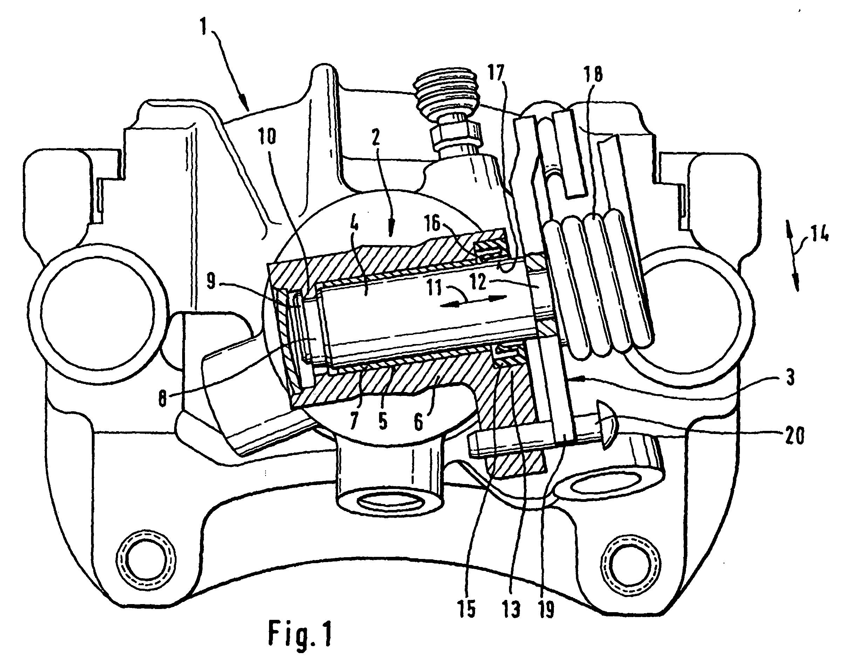

Fig. 1 zeigt teilweise im Schnitt eine Scheibenbremse 1 mit einer mechanischen Betätigungseinrichtung 2 für nicht dargestellte hydraulisch beaufschlagbare Bremsbeläge. Die mechanische Betätigungseinrichtung 2 weist einen Betätigungshebel 3 sowie eine mit diesem drehfest verbundene Betätigungswelle 4 auf, die in Wirkverbindung mit einem nicht dargestellten Druckstück steht. Die Betätigungswelle 4 ist in einer Bohrung 5 des Bremsengehäuses 6 innerhalb eines Gleitlagers 7 drehbar gelagert und weist zumindest teilweise einen von der Kreisform abweichenden Querschnitt auf. Am Ende 8 der Betätigungswelle 4 ist ein Bund 9 vorgesehen, welcher zum Anschlag an eine Zwischenwand 10 dient und die Betätigungswelle 4 in axialer Richtung 11 in dem Bremsengehäuse 6 sichert. Das andere Ende 12 der Betätigungswelle 4 tritt im Bereich einer Wellendurchführung 13 aus dem Bremsengehäuse 6. In radialer Richtung 14 bezogen auf die Betätigungswelle 4 ist ein Wellendichtring 15 vorgesehen, welcher das Gleitlager 7 gegen das Eindringen von Schmutz und Feuchtigkeit von außen schützt. Hierzu liegt eine Dichtlippe 16 des drehfest in dem Bremsengehäuse 6 angeordneten Wellendichtrings 15 am Umfang 17 der Betätigungswelle 4 an. Der Betätigungshebel 3 mit der Welle 4 wird ständig mit Hilfe einer Feder 18 in eine Endlage gedrückt, in welcher der Betätigungshebel 3 mit einem Arm 19 gegen einen Stift 20 anschlägt.

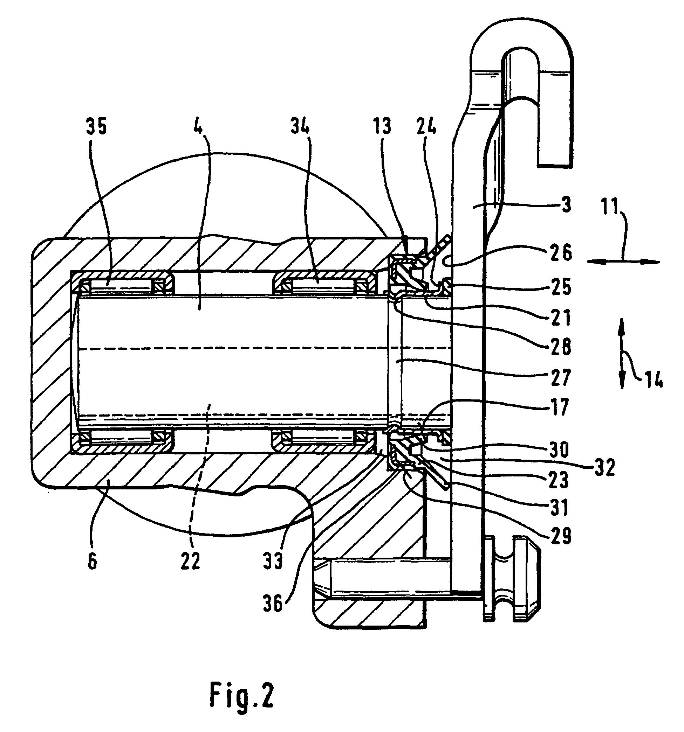

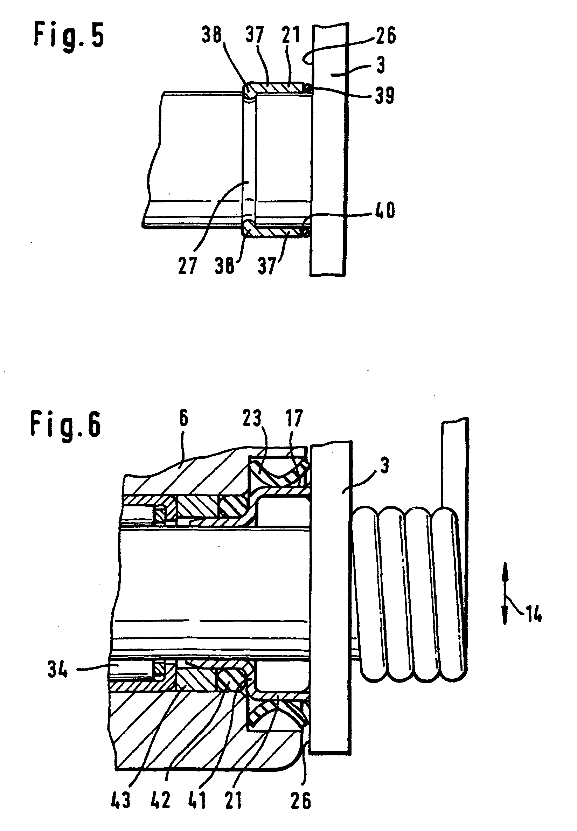

Wie Fig. 2 zeigt, ist gemäß der Erfindung der Betätigungswelle 4 ein drehfest mit dieser bewegbares Dichtungselement 21 in Form einer Buchse zugeordnet, welche zumindest teilweise eine Ausnehmung 22 der Betätigungswelle 4 übergreift. Die Buchse stellt somit im Bereich der Wellendurchführung 13 einen kreisförmigen Umfang 17 sicher, welcher in radialer Richtung 14 mit einem zugeordneten Dichtungselement 23 in Form eines Dichtringes zusammenwirkt. An dem hebelseitigen Ende weist die Buchse einen Bund 24 auf, welcher unter Zwischenordnung einer Dichtscheibe 25 an einer Gegendichtfläche 26 des Betätigungshebels 3 anliegt. Es ist anzumerken, daß Bund 24 und Dichtscheibe 25 nicht zwingend erforderlich sind, wenn das Dichtungselement 21 unmittelbar dichtend an der Gegendichtfläche 26 befestigt ist. An ihrem anderen Ende greift die Buchse in eine umfangsseitig an der Betätigungswelle 4 angeordnete Nut 27 formschlüssig ein. Zu diesem Zweck ist an der Buchse zumindest ein Vorsprung 28 vorgesehen, welcher sich nach radial innen erstreckt und eine drehfeste Befestigung der Buchse an der Betätigungswelle 4 gewährleistet. Darüber hinaus sorgt jeder Vorsprung 28 für eine axiale Sicherung der Buchse gegenüber der Betätigungswelle 4. Es versteht sich, daß grundsätzlich auch andersartige Befestigungen der Buchse an der Betätigungswelle 4 vorgesehen sein können. Dies ist insbesondere auch davon abhängig, welcher Werkstoff für die Buchse gewählt wird. Beispielsweise können Buchsen aus Blech mit der Betätigungswelle 4 verstemmt, verklebt bzw. verlötet sein. Darüber hinaus ist es denkbar, die Buchse unmittelbar an der Gegendichtfläche 26 des Betätigungshebels 3 anzulöten bzw. anzukleben, so daß die Nut 27 vollständig entfallen kann. Eine derartige Lösung ist in Fig. 6 dargestellt. Schließlich sind auch Kombinationen der vorstehenden Möglichkeiten denkbar, die für eine erhöhte Betriebssicherheit infolge verbesserter Abdichtung oder Befestigung sorgen.

Fig. 2 zeigt ferner, daß das Dichtungselement 23 gehäusefest in einer Bohrung 29 des Bremsengehäuses 6 angeordnet ist. Das Dichtungselement 23 verfügt über eine erste, in radialer Richtung 14 an dem Umfang 17 des Dichtungselementes 21 elastisch anliegende Dichtlippe 30 sowie über eine zweite in axialer Richtung 11 an der Gegendichtfläche 26 des Betätigungshebels 3 elastisch anliegende Dichtlippe 31. Dadurch entsteht zwischen erster und zweiter Dichtlippe 30,31 eine Kammer 32, die grobe Schmutzpartikel von dem Innenraum 33 fernhält. Insbesondere die zweite Dichtlippe 31 schützt die Wälzlager 34,35 vor feinen Schmutzpartikeln und vor Feuchtigkeit. Die Wälzlager 34,35 haben den Vorteil, daß mit ihnen einerseits geringe Reibverluste verbunden sind und daß sie andererseits unempfindlich gegenüber Korrosion sind. Ganz grundsätzlich können aber ebenso Gleitlager eingesetzt werden, ohne den Grundgedanken der Erfindung zu verlassen. Im übrigen versteht sich, daß das erfindungsgemäße Dichtungselement 23 beliebig ausgeführt werden kann, beispielsweise mit einem eingeformten Verstärkungsring 36.

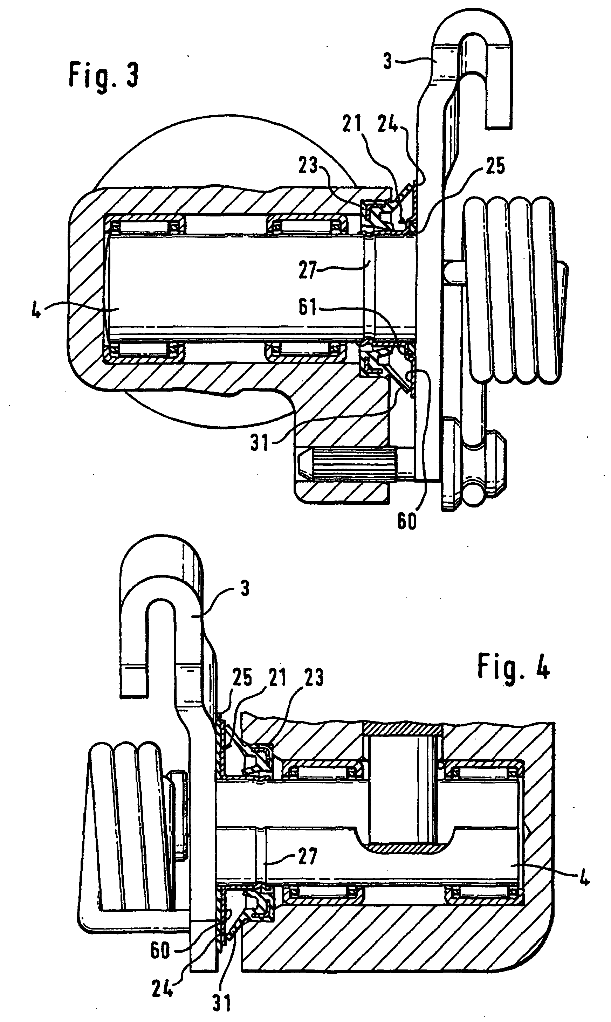

Den Fig. 3 und 4 sind weiterentwickelte Ausführungsformen der Abdichtungsanordnung für eine mechanische Betätigungseinrichtung entsprechend Fig. 2 zu entnehmen. Gegenüber Fig.2 ist dort insbesondere das als Buchse gestaltete Dichtungselement 21 anders ausgeführt. Wie in der bereits beschriebenen Variante greift die Buchse 21 an einem Ende formschlüssig in eine Nut 27 der Betätigungswelle 4 ein und ist damit an dieser sicher gehalten. Zur Verbesserung der Dichtwirkung besitzt die Buchse 21 an ihrem wellenendseitigen Ende einen abgewinkelten Bund 24, der sich radial vorteilhafterweise so weit erstreckt, daß er eine Dichtfläche 60 ausbildet. An dieser Dichtfläche 60 liegt axial eine Dichtlippe 31 des Dichtungselementes 23 an. Bevorzugt wird dabei die Buchse 21 aus rostfreiem Stahl gefertigt, wobei der Bund 24 durch eine Blechumformung, beispielsweise einen Prägevorgang gestaltet wird. Analog dazu kann die Buchse selbstverständlich auch aus einem anderen geeigneten Material z. B. Kunststoff bestehen. Aufgrund der geeigneten Materialauswahl für die Buchse, insbesondere im Falle von rostfreiem Stahl, wird die gewünschte Oberflächengüte der Dichtfläche 60 bereitgestellt. Daraus ergibt sich eine besonders wirksame Dichtverbindung zwischen Buchse 21 und Dichtlippe 31. Zur Gewährleistung einer Dichtung zwischen Buchse und Betätigungshebel 3, ist zischen dem Bund 24 und dem Betätigungshebel eine zusätzliche Dichtscheibe 25 eingeschlossen. Diese zusätzliche Maßnahme trägt dafür Sorge, das Eindringen von Schmutz zwischen Buchse und Betätigungshebel 3 zu verhindern. Gemäß Fig. 3 kann die ringförmige Dichtscheibe 25 durch einen Absatz 61 in der Buchse sicher positioniert und mit dem erforderlichen Druck an den Betätigungshebel angepreßt werden.

In der Dichtungsanordnung nach Fig. 4 besitzt die Dichtscheibe 25 in radialer Richtung eine größere Erstreckung und wird axial unter Vorspannung zwischen der Buchse 21 und dem Betätigungshebel 3 eingeschlossen. Der in Fig. 3 gezeigt Absatz 61 an der Buchse kann damit entfallen und es ergibt sich eine vereinfachte Gestaltung für die Buchse. Analog zum bereits Beschriebenen ist der Bund 24 der Buchse radial soweit verlängert, daß er eine Dichtfläche 60 zur axialen Anlage der zugehörigen Dichtlippe 31 ausbildet.

Fig. 5 zeigt eine Ausführung, bei der das Dichtungselement 21 buchsenförmig ist und mit am Ende von federnden Armen 37 angeordneten Fingern 38 in die Nut 27 eingreift. An dem, dem Hebel 3 zugewandten Ende befindet sich zwischen dem Dichtungselement 21 und der Gegendichtfläche 26 ein O-Ring 39, welcher für eine Abdichtung eines Spaltes 40 zwischen Betätigungswelle 4 und Dichtungselement 21 sorgt. Das Dichtungselement 21 ist hierbei mit Hilfe des elastischen O-Ringes 39 gleichsam elastisch zwischen Gegendichtfläche 26 und Nut 27 eingespannt. Das Dichtungselement 21 kann also als Kunststoffbauteil ausgebildet sein und mit der Nut 27 verrastend auf die Betätigungswelle 4 aufgesteckt werden. Mit dieser Anordnung werden Montagevorteile erzielt.

Gemäß Fig. 6 ist das hülsenförmige Dichtungselement 21 an der Gegendichtfläche 26 des Betätigungshebels angelötet bzw. angeklebt und verfügt ferner über einen Absatz 41, welcher dazu dient, einen O-Ring 42 unter Zwischenordnung eines Distanzringes 43 gegen ein Wälzlager 34 zu pressen. An dem Umfang 17 des Dichtungselementes 21 liegt in radialer Richtung 14 ein Dichtungselement 23 mit V-förmigem Querschnitt an. An jedem Schenkel des Dichtungselementes 23 befinden sich Dichtlippen welche an der Gegendichtfläche 26 beziehungsweise an dem Bremsengehäuse 6 anliegen. Das Dichtungselement 23 dient hierbei im wesentlichen als Vordichtung, während der O-Ring 42 als Hauptdichtung fungiert. Ganz grundsätzlich ist es möglich, Vordichtung und Hauptdichtung einstückig auszubilden, indem der als Hauptdichtung fungierende O-Ring 42 unmittelbar an die Vordichtung angeformt wird.

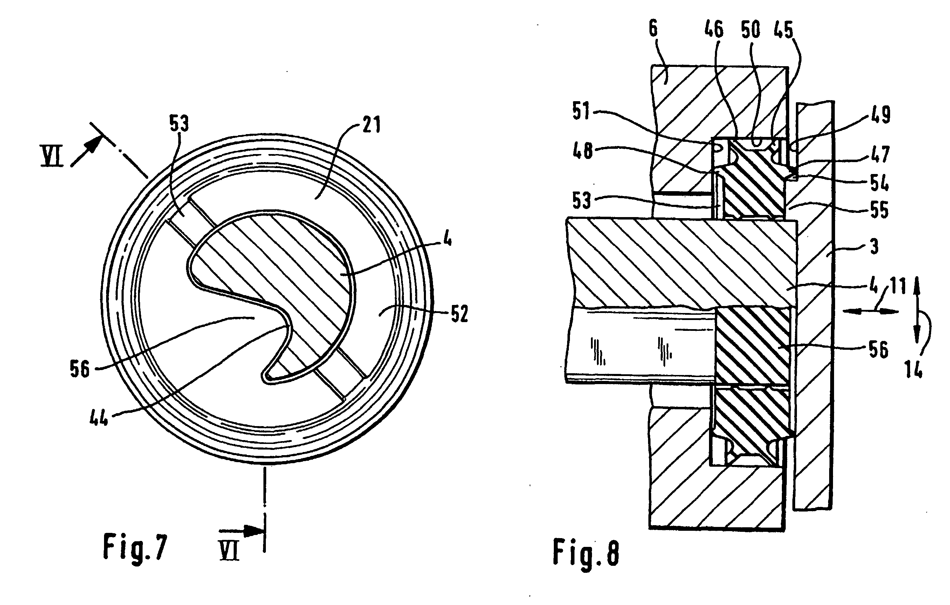

In der Fig. 7 ist ein scheibenförmiges Dichtungselement 21 dargestellt, welches auf eine profilierte Betätigungswelle 4 aufgesteckt ist. Das Dichtungselement 21 ist fomschlüssig an der Betätigungswelle 4 angeordnet, weil der Vorsprung (56) in die Ausnehmung (44) eingreift. Die Ausnehmung (44) wirkt mit einem nicht dargestellten Druckstück zusammen. Fig. 8 zeigt in einer Schnittdarstellung ein in einem Bremsengehäuse 6 angeordnetes Dichtungselement 21, das auf einer Betätigungswelle 4 befestigt ist. Das Dichtungselement 21 verfügt über zwei radial äußere Dichtlippen 45,46, sowie über zwei axiale Dichtlippen 47,48. Die Dichtlippen 45,46,47,48 dienen zur Anlage an zugeordnete Gegendichtflächn 49,50,51, die am Betätigungshebel 3 oder am Bremsengehäuse 6 angeordnet sind. Das Dichtungselement 21 dichtet damit sowohl in axialer Richtung 11 als auch in radialer Richtung 14. An jeder Stirnfläche 52 befinden sich Ausnehmungen 53,54, zum Eingriff von nockenförmigen Mitnehmern 55 des Betätigungshebels 3. Dadurch wird eine drehfeste Verbindung des Dichtungselementes 21 mit der Betätigungswelle 4 erzielt, ohne daß sich das Dichtungselement 21, welches vorzugsweise aus elastischem Material wie beispielsweise EPDM besteht, in unzulässiger Weise im Bereich der Ausnehmung 44 verformt.

Es bleibt darauf hinzuweisen, daß das Dichtungselement 21 im übrigen auch in vielfältiger Weise abgewandelt werden kann, ohne den grundsätzlichen Erfindungsgedanken zu verlassen.

## Patentansprüche

1. Scheibenbremse mit hydraulisch betätigbaren Bremsbelägen sowie mit einer mechanischen Betätigungseinrichtung (2), welche eine in einer Bohrung (5) eines Bremsengehäuses (6) drehbar sowie gedichtet gelagerte Betätigungswelle (4) aufweist, die auf zumindest einen der Bremsbeläge einwirkt wobei zumindest im Bereich einer Wellendurchführung (13) ein erstes Dichtungselement (21) vorgesehen ist, welches in radialer Richtung (14) mit zugeordneten zweiten Dichtungselementen (23) und/oder Dichtflächen (26, 49, 50, 51) zusammenwirkt, **dadurch gekennzeichnet, daß** das erste Dichtungselement (21) drehfest mit der Betätigungswelle (4) verbunden und mit dieser bewegbar ist.

2. Scheibenbremse nach Anspruch 1, **dadurch gekennzeichnet, daß** das drehbar mit der Betätigungswelle (4) bewegbare erste Dichtungselement (21) in axialer Richtung mit zugeordneten zweiten Dichtungselementen (23, 25) und/oder Dichtflächen: (26, 49, 50, 51) zusammenwirkt.

3. Scheibenbremse nach einem oder mehreren der vorhergehenden Ansprüche, **dadurch gekennzeichnet, daß** die Betätigungswelle (4) einen zumindest teilweise von der Kreisform abweichenden Querschnitt aufweist.

4. Scheibenbremse nach einem oder mehreren der vorhergehenden Ansprüche, **dadurch gekennzeichnet, daß** das erste Dichtungselement (21) eine Ausnehmung (22) der Betätigungswelle (4) zumindest teilweise übergreift.

5. Scheibenbremse nach einem oder mehreren der vorhergehenden Ansprüche, **dadurch gekennzeichnet, daß** das erste Dichtungselement (21) in axialer Richtung (11) wellenendseitig an einer Gegendichtfläche (26) anliegt.

6. Scheibenbremse nach einem oder mehreren der vorhergehenden Ansprüche, **dadurch gekennzeichnet, daß** das zweite Dichtungselement (23) wellenendseitig an einem Betätigungshebel (3) anliegt.

7. Scheibenbremse nach einem oder mehreren der vorhergehenden Ansprüche, **dadurch gekennzeichnet, daß** das erste Dichtungselement (21) als Buchse ausgebildet ist.

8. Scheibenbremse nach einem oder mehreren der vorhergehenden Ansprüche, **dadurch gekennzeichnet, daß** zwischen der Gegendichtfläche (26) und der Buchse ein zusätzliches Dichtungselement (25) vorgesehen ist.

9. Scheibenbremse nach einem oder mehreren der vorhergehenden Ansprüche, **dadurch gekennzeichnet, daß** die Buchse einen wellenendseitigen Bund (24) aufweist.

10. Scheibenbremse nach Anspruch 9, **dadurch gekennzeichnet, daß** das zweite Dichtungselement (23) in axialer Richtung (11) mit dem wellenendseitigen Bund (24) der Buchse zusammenwirkt.

11. Scheibenbremse nach einem oder mehreren der vorhergehen den Ansprüche, **dadurch gekennzeichnet, daß** die Betätigungswelle (4) mit einer umfangsseitigen Nut (27) versehen ist, in die das erste Dichtungselement (21) formschlüssig eingreift.

12. Scheibenbremse nach einem oder mehreren der vorhergehenden Ansprüche, **dadurch gekennzeichnet, daß** das erste Dichtungselement (21) federnde Arme (37) und Finger (38) aufweist, welche in die Nut (27) eingreifen.

13. Scheibenbremse nach einem oder mehreren der vorhergehenden Ansprüche, **dadurch gekennzeichnet, daß** das erste Dichtungselement (21) scheibenförmig ist und radial äußere Dichtlippen (45,46) zur Anlage an einer Gegendichtfläche (50) aufweist.

14. Scheibenbremse nach einem oder mehreren der vorhergehenden Ansprüche, **dadurch gekennzeichnet, daß** das erste Dichtungselement (21) axiale Dichtlippen (47,48) zur Anlage an Gegendichtflächen (49,51) aufweist.

15. Scheibenbremse nach einem oder mehreren der vorhergehenden Ansprüche, **dadurch gekennzeichnet, daß** das erste Dichtungselement (21) mit einem Vorsprung (56) formschlüssig in eine Ausnehmung (44) der Betätigungswelle (4) eingreift.

16. Scheibenbremse nach einem oder mehreren der vorhergehenden Ansprüche, **dadurch gekennzeichnet, daß** das erste Dichtungselement (21) mit mindestens einer Ausnehmung (53,54) versehen ist, in die ein Mitnehmer (55) des Betätigungshebels (3) eingreift.

17. Scheibenbremse nach einem oder mehreren der Ansprüche 1 bis 7, **dadurch gekennzeichnet, daß** das erste Dichtungselement (21) dichtend an der Gegendichtflächen (49,51) anliegt.

18. Scheibenbremse nach Anspruch 17, **dadurch gekennzeichnet, daß** das erste Dichtungselement (21) an der Gegendichtfläche (26) befestigt ist.

19. Scheibenbremse nach Anspruch 18, **dadurch gekennzeichnet, daß** das erste Dichtungselement (21) an die Gegendichtfläche (26) angeklebt oder angelöted ist wobei das erste Dichtungselement (21) vorzugsweise durch eine Buchse gebildet ist.

## Claims

1. Disc brake with hydraulically operable brake pads and a mechanical actuating mechanism (2) which includes an actuating shaft (4) that is rotatably and sealedly mounted in a bore (5) of a brake housing (6) and acts upon at least one of the brake pads, wherein at least in the area of a shaft duct (13) a first sealing element (21) is provided and cooperates in a radial direction (14) with associated second sealing elements (23) and/or sealing surfaces (26, 49, 50, 51),
**characterized in that** the first sealing element (21) is fixed to the actuating shaft (4) so as to rotate along with it.

2. Disc brake as claimed in claim 1,
**characterized in that** the first sealing element (21) which is fixed to the actuating shaft (4) so as to rotate along with it cooperates with associated second sealing elements (23, 25) and/or sealing surfaces (26, 49, 50, 51) in an axial direction.

3. Disc brake as claimed in any one or more of the preceding claims,
**characterized in that** the actuating shaft (4) has a cross-section which differs at least in part from the shape of a circle.

4. Disc brake as claimed in any one or more of the preceding claims,
**characterized in that** the first sealing element (21) extends at least in part over a recess (22) in the actuating shaft (4).

5. Disc brake as claimed in any one or more of the preceding claims,
**characterized in that** the first sealing element (21) bears against a mating sealing surface (26) in an axial direction (11) close to the shaft end.

6. Disc brake as claimed in any one or more of the preceding claims,
**characterized in that** the second sealing element (23) bears against an actuating lever (3) close to the shaft end.

7. Disc brake as claimed in any one or more of the preceding claims,
**characterized in that** the first sealing element (21) is configured as a bushing.

8. Disc brake as claimed in any one or more of the preceding claims,
**characterized in that** an additional sealing element (25) is provided between the mating sealing surface (26) and the bushing.

9. Disc brake as claimed in any one or more of the preceding claims,
**characterized in that** the bushing includes a collar (24) close to the shaft end.

10. Disc brake as claimed in claim 9,
**characterized in that** the second sealing element (23) cooperates with the collar (24) close to the shaft end in an axial direction (11).

11. Disc brake as claimed in any one or more of the preceding claims,
**characterized in that** the actuating shaft (4) includes a groove (27) on the circumference into which the first sealing element (21) is positively engaged.

12. Disc brake as claimed in any one or more of the preceding claims,
**characterized in that** the first sealing element (21) includes resilient arms (37) and fingers (38) which engage into the groove (27).

13. Disc brake as claimed in any one or more of the preceding claims,
**characterized in that** the first sealing element (21) has a disc-shaped configuration and includes radially outside sealing lips (45, 46) for abutment on a mating sealing surface (50).

14. Disc brake as claimed in any one or more of the preceding claims,
**characterized in that** the first sealing element (21) includes axial sealing lips (47, 48) for abutment on mating sealing surfaces (49, 51).

15. Disc brake as claimed in any one or more of the preceding claims,
**characterized in that** the first sealing element (21) with a projection (56) is positively engaged in a recess (44) of the actuating shaft (4).

16. Disc brake as claimed in any one or more of the preceding claims,
**characterized in that** the first sealing element (21) includes at least one recess (53, 54) into which a carrier element (55) of the actuating lever (3) is engaged.

17. Disc brake as claimed in any one or more of claims 1 to 7,
**characterized in that** the first sealing element (21) is in sealing abutment on the mating sealing surfaces (49, 51).

18. Disc brake as claimed in claim 17,
**characterized in that** the first sealing element (21) is attached to the mating sealing surface (26) .

19. Disc brake as claimed in claim 18,
**characterized in that** the first sealing element (21) is cemented or welded to the mating sealing surface (26), with the first sealing element (21) being preferably formed of a bushing.

## Revendications

1. Frein à disque comprenant des garnitures de frein à actionnement hydraulique et un dispositif d'actionnement mécanique (2) qui comporte un arbre d'actionnement (4) qui est monté rotatif et d'une manière étanche dans un alésage (5) d'un boîtier de frein (6) et qui exerce son action sur au moins l'une des garnitures de frein, tandis qu'au moins dans la zone d'un passage d'arbre (13), il est prévu un premier élément d'étanchéité (21) qui coopère en direction radiale (14) avec des seconds éléments d'étanchéité (23) et/ou surfaces d'étanchéité (26, 49, 50, 51) associés, **caractérisé en ce que** le premier élément d'étanchéité (21) est relié d'une manière fixe en rotation à l'arbre d'actionnement (4) et peut être déplacé avec celui-ci.

2. Frein à disque suivant la revendication 1, **caractérisé en ce que** le premier élément d'étanchéité (21) pouvant être déplacé en entraînement en rotation avec l'arbre d'actionnement (4) coopère en direction axiale avec des seconds éléments d'étanchéité (23, 25) et/ou surfaces d'étanchéité (26, 49, 50, 51) associés.

3. Frein à disque suivant une ou plusieurs des revendications précédentes, **caractérisé en ce que** l'arbre d'actionnement (4) présente une section transversale s'écartant au moins en partie de la forme circulaire.

4. Frein à disque suivant une ou plusieurs des revendications précédentes, **caractérisé en ce que** le premier élément d'étanchéité (21) couvre au moins partiellement une partie en retrait (22) de l'arbre d'actionnement (4).

5. Frein à disque suivant une ou plusieurs des revendications précédentes, **caractérisé en ce que** le premier élément d'étanchéité (21) s'appuie en direction axiale (11) du côté de l'extrémité de l'arbre sur une surface d'étanchéité complémentaire (26).

6. Frein à disque suivant une ou plusieurs des revendications précédentes, **caractérisé en ce que** le second élément d'étanchéité (23) s'appuie du côté de l'extrémité de l'arbre sur un levier d'actionnement (3).

7. Frein à disque suivant une ou plusieurs des revendications précédentes, **caractérisé en ce que** le premier élément d'étanchéité (21) est réalisé sous forme d'une douille.

8. Frein à disque suivant une ou plusieurs des revendications précédentes, **caractérisé en ce qu'**un élément d'étanchéité (25) supplémentaire est prévu entre la surface d'étanchéité complémentaire (26) et la douille.

9. Frein à disque suivant une ou plusieurs des revendications précédentes, **caractérisé en ce que** la douille comporte une collerette (24) située du côté de l'extrémité de l'arbre.

10. Frein à disque suivant la revendication 9, **caractérisé en ce que** le second élément d'étanchéité (23) coopère en direction axiale (11) avec la collerette (24) de la douille qui est située du côté de l'extrémité de l'arbre.

11. Frein à disque suivant une ou plusieurs des revendications précédentes, **caractérisé en ce que** l'arbre d'actionnement (4) est pourvu d'une gorge (27), située du côté de la périphérie, dans laquelle le premier élément d'étanchéité (21) s'engage par complémentarité de formes.

12. Frein à disque suivant une ou plusieurs des revendications précédentes, **caractérisé en ce que** le premier élément d'étanchéité (21) comporte des bras (37) à comportement élastique et des doigts (38) qui s'accrochent dans la gorge (27).

13. Frein à disque suivant une ou plusieurs des revendications précédentes, **caractérisé en ce que** le premier élément d'étanchéité (21) est en forme de disque et comporte des lèvres d'étanchéité (45, 46) radialement extérieures destinées à venir en appui sur une surface d'étanchéité complémentaire (50).

14. Frein à disque suivant une ou plusieurs des revendications précédentes, **caractérisé en ce que** le premier élément d'étanchéité (21) comporte des lèvres d'étanchéité (47, 48) axiales destinées à venir en appui sur des surfaces d'étanchéité complémentaires (49, 51).

15. Frein à disque suivant une ou plusieurs des revendications précédentes, **caractérisé en ce que** le premier élément d'étanchéité (21) s'accroche par complémentarité de formes, par une partie en saillie (56), dans une partie en retrait (44) de l'arbre d'actionnement (4).

16. Frein à disque suivant une ou plusieurs des revendications précédentes, **caractérisé en ce que** le premier élément d'étanchéité (21) est pourvu d'au moins une partie en retrait (53, 54) dans laquelle un élément d'entraînement (55) du levier d'actionnement (3) s'accroche.

17. Frein à disque suivant une ou plusieurs des revendications 1 à 7, **caractérisé en ce que** le premier élément d'étanchéité (21) s'appuie d'une manière étanche sur les surfaces d'étanchéité complémentaires (49, 51).

18. Frein à disque suivant la revendication 17, **caractérisé en ce que** le premier élément d'étanchéité (21) est fixé sur la surface d'étanchéité complémentaire (26).

19. Frein à disque suivant la revendication 18, **caractérisé en ce que** le premier élément d'étanchéité (21) est fixé par collage ou brasage sur la surface d'étanchéité complémentaire (26), le premier élément d'étanchéité (21) consistant de préférence en une douille.
